# FASCICULE DE BREVET EUROPEEN

(11) **EP 1 893 424 B1**
(45) Date de publication et mention de la délivrance du brevet: **14.11.2012**
(21) Numéro de dépôt: 06778918.0
(22) Date de dépôt: 09.06.2006
(51) Int. Cl.: B60G 7/00

(54) **BRAS DE SUSPENSION DU TYPE BOOMERANG, DONT UN REBORD PRESENTE UN PROLONGEMENT EN ELEVATION, ET VEHICULE CORRESPONDANT**
BOOMERANG-ARTIGER TRÄGERARM MIT ANSTEIGENDER ERWEITERUNG EINER KANTE UND ENTSPRECHENDES FAHRZEUG
BOOMERANG-TYPE SUSPENSION ARM, WHEREOF ONE EDGE HAS A RISING EXTENSION, AND CORRESPONDING VEHICLE

(30) Priorité: 09.06.2005 FR 0505888
(43) Date de publication de la demande: 05.03.2008
(73) Titulaire: Auto Chassis International SNC, 72086 Le Mans Cédex 9 (FR)
(72) Inventeur: ROULIN, François, F-92000 Nanterre (FR); THIREL, Jean Marc, F-78700 Conflans Ste Honorine (FR); GALLO, Emmanuel, F-72000 Le Mans (FR); CHABROL, Thierry, F-78150 Le Chesnay (FR)
(74) Mandataire: Rougemont, Bernard
(86) Numéro de dépôt international: PCT/FR2006/050540
(87) Numéro de publication internationale: WO 2006/131683

(56) Documents cités:
- EP-A- 1 223 058
- WO-A-2004/002761
- PATENT ABSTRACTS OF JAPAN vol. 1996, no. 12, 26 décembre 1996 (1996-12-26) & JP 08 197922 A (SUZUKI MOTOR CORP), 6 août 1996 (1996-08-06)

## Description

Le domaine de l'invention est celui des véhicules automobiles. Plus précisément, l'invention concerne les bras de suspension pour les véhicules automobiles.

On rappelle qu'un bras de suspension est un organe de châssis qui relie un support de roue (avant ou arrière) d'un véhicule à la caisse du véhicule ou à un berceau fixé à la caisse.

On connaît plusieurs techniques de bras de suspension, et notamment les bras de suspension de type boomerang (appelés ainsi pour leur similitude de forme avec un boomerang).

Un bras de suspension de ce type peut être défini par trois points caractéristiques désignés par les lettres A, B, E.

Les points A (centre de l'articulation avant) et B (centre de l'articulation arrière) sont les points d'attache du bras sur le berceau du véhicule et E est le centre de la rotule qui lie le bras à une partie tournante du véhicule. Ces trois points forment le plan principal du bras, dans lequel transitent les efforts avant de la roue.

Un tel bras de suspension a un mouvement de rotation autour de l'axe X (AB) et suit les mouvements verticaux de la roue du choc au rebond.

Les bras de suspensions mono tôles boomerang tels que proposés actuellement, comme par exemple le bras proposé dans le document WO 2004/002761, sont des bras de forme plane emboutis dans leur partie centrale, avec des bords tombés verticaux. Les emboutis des bras sont de faible profondeur et la zone du logement de la rotule peut être inclinée par rapport au plan principal du bras. Le bras peut également intégrer des fonctions supplémentaires, telles que notamment :
- permettre le passage d'une visseuse ;
- permettre la fixation d'une barre anti-dévers.

Les sections des emboutis ont des formes en U ouvertes plus ou moins refermées et de forme générale rectangulaire.

Une autre considération importante lors de la conception des bras de suspension concerne son encombrement et son débattement, notamment en fonction de la répartition spatiale des différents organes qui l'entourent.

On comprend que la conception d'un bras de suspension est donc notamment liée à l'architecture du véhicule. La définition du bras doit par conséquent à la fois satisfaire à un cahier des charges qui combine les performances du bras et les contraintes de proximité avec son environnement (pneumatique, barre anti-dévers, biellette de direction, berceau, passage de visseuse...).

Or, les performances du bras s'apprécient en particulier vis-à-vis de sa résistance aux contraintes qu'il subit.

En pratique, lorsque le véhicule roule, ces contraintes se traduisent notamment par une charge, dirigée dans le sens longitudinal du véhicule, transmise au bras par l'intermédiaire de la roue. Une telle charge impartit au bras une contrainte de flambage s'appliquant notamment sur le côté du bras s'étendant entre les points A et E mentionnés précédemment.

Il est donc nécessaire de concevoir le bras avec une rigidité suffisante entre les points A et E pour résister aux contraintes.

Certes, une solution simple permet de conférer une augmentation de rigidité, cette solution consistant à augmenter l'épaisseur de la tôle.

Toutefois, une telle solution présente un inconvénient en ce qu'elle se traduit par une augmentation non souhaitable du poids du bras, ainsi que par un surcoût lié à l'augmentation de matière.

Différentes configurations des bords de bras de suspension ont été proposées dans le but d'apporter de la rigidité sans entraîner d'augmentation de poids.

Il a notamment été proposé de border le bras d'un contour réalisé lors d'une phase d'emboutissage et présentant une section en U ouverte vers le bas, le rebord du bras étant délimité par une paroi s'étendant vers le bas appelée communément « bord tombé ».

Une autre solution a été proposée par l'art antérieur selon laquelle, pendant que le véhicule roule et dans le cas où une charge serait appliquée au bras de suspension dans une direction coupant la direction de balancement du bras, ce dernier est conçu de telle sorte que la région où s'exerce une contrainte maximale est une partie non d'extrémité du bras.

Pour ce faire, le bras de suspension comprend une partie principale, placée essentiellement à l'horizontale, et des parties latérales courbées vers le bas par rapport aux parties non d'extrémité transversales de la partie principale.

De plus, les parties d'extrémité du bras sont courbées à partir des parties d'extrémités inférieures des parties latérales vers un côté intérieur de la section transversale.

Les concepteurs de cette solution indiquent que celle-ci est avantageuse à plusieurs titres, outre le fait de l'apport en rigidité sans augmentation de poids.

Il est notamment indiqué qu'un tel bras évite l'accumulation de neige ou de glace à l'intérieur du bras, ce qui évite le givrage de celui-ci.

Par ailleurs, les concepteurs de ce bras ajoutent que celui-ci est avantageux du point de vue de la protection des parties d'extrémités du bras contre la rouille, ces parties d'extrémités étant orientées de telles sortes que des gravillons projetés depuis l'avant du véhicule ne peuvent venir les frapper, ce qui risquerait de rayer la peinture généralement présente en couche mince au niveau des parties d'extrémités.

Cependant, une telle solution implique plusieurs inconvénients.

En premier lieu, un tel bras entraîne un effet « crochet » vis-à-vis d'éventuels objets présents sur le sol. En d'autres termes, les extrémités recourbées sous le bras sont susceptibles d'accrocher certains objets au-dessus desquels le véhicule passe, tels que par exemple des branches, des sacs plastiques ou autres détritus encombrant les routes.

Ceci peut bien entendu causer certains désagréments en termes de bruits causés par le battement de ces détritus sur la caisse du véhicule. Dans certains cas, ceci peut même causer une dégradation de certains organes présents sous la caisse du véhicule.

Par ailleurs, selon la solution proposée, chaque bord du bras est conçu selon le même principe, le bras présentant donc une raideur importante sur toute sa périphérie, ou quasiment.

Aussi, un tel bras ne permet aucune dissipation de contraintes, ce qui se traduit par une transmission quasi intégrale des efforts à la caisse par l'intermédiaire du berceau supportant les bras de ce type.

Par conséquent, la rigidité accrue de ces bras entraîne une transmission plus importante des vibrations ou des secousses à la caisse, ce qui n'est pas souhaitable en termes de confort.

L'invention a notamment pour objectif de pallier les inconvénients de l'art antérieur.

Plus précisément, l'invention a pour objectif de proposer un bras de suspension présentant une grande résistance aux contraintes, ceci sans entraîner d'effet crochet tel que mentionné en référence à l'art antérieur.

L'invention a également pour objectif de fournir un tel bras de suspension qui autorise au moins en partie, une dissipation des contraintes qui s'exercent sur lui.

L'invention a aussi pour objectif de fournir un tel bras qui soit simple de conception, facile à mettre en oeuvre et qui puisse être fabriqué aisément.

Ces objectifs, ainsi que d'autres qui apparaîtront par la suite sont atteints grâce à l'invention qui a pour objet un bras de suspension pour une roue d'un véhicule automobile, du type présentant une forme de boomerang réalisée à partir d'une plaque dont l'une des extrémités, dite extrémité support d'une partie tournante, est destinée à être couplée à une roue, l'autre extrémité, dite articulation avant, et la partie médiane du bras, dite articulation arrière, étant destinées à être couplées à un berceau solidaire du châssis dudit véhicule, caractérisé en ce qu'au moins le rebord d'extrémité s'étendant entre ladite extrémité support d'une partie tournante et ladite articulation arrière présente un prolongement en élévation par rapport à la face, dite face supérieure, de ladite plaque destinée à être dirigée vers le haut lorsque ledit bras est monté sur ledit berceau.

De cette façon, on confère au bras de suspension une rigidité sur le rebord du bras soumis à de fortes contraintes, ceci en évitant un effet « crochet » tel que celui mentionné précédemment.

En effet, le prolongement étant prévu en élévation, on supprime, ou à tout le moins on limite considérablement le risque que le bras accroche, voire entraîne, des objets plus ou moins encombrants présents sur le sol.

L'invention propose donc une approche opposée aux solutions classiques consistant à apporter de la rigidité au bras en repliant le rebord vers le dessous du bras.

En outre, l'invention propose une conception nouvelle de bras de suspension qui permet d'envisager de nouveaux types d'organisation des organes classiquement associés à un bras de suspension.

Selon une solution avantageuse, le rebord s'étendant entre ladite articulation avant et ladite articulation arrière présente un bord tombé.

Ainsi, comme cela va apparaître plus clairement par la suite, on peut réaliser les rebords du bras avec des rigidités distinctes, autorisant une relative dissipation des contraintes s'exerçant sur le bras et, par conséquent, une atténuation des charges transmises au berceau et donc au châssis du véhicule.

En outre, une conception du bras de suspension selon laquelle les extrémités du bras s'étendent dans des directions différentes permet d'éviter des concentrations de vibrations, ce qui évite des effets de résonance. Un tel bras s'avère par conséquent moins sujet à des effets néfastes d'un point de vue acoustique.

Selon l'invention, ledit prolongement en élévation présente transversalement une partie supérieure courbée.

On augmente de cette façon la rigidité du rebord du bras susceptible d'être soumis aux contraintes maximales.

Dans ce cas, ladite partie supérieure est préférentiellement courbée de façon que l'extrémité libre dudit prolongement soit dirigée vers le bas, en direction de ladite face supérieure.

Un tel bord dit roulé, contribue à augmenter encore la rigidité du rebord correspondant.

Selon une première variante ledit prolongement en élévation présente transversalement une courbure continue.

Selon une deuxième variante ledit prolongement en élévation présente transversalement une portion sensiblement droite se prolongeant par une partie supérieure courbée.

On peut ainsi, selon la variante de réalisation choisie, faire varier la rigidité du rebord correspondant, ceci aussi en fonction de l'architecture souhaitée par les concepteurs de véhicules.

Selon une solution avantageuse, le bras de suspension présente, au voisinage d'un rebord s'étendant entre ladite articulation avant et ladite extrémité support, une paroi en élévation par rapport à ladite face supérieure.

Dans ce cas, ladite paroi en élévation s'étend préférentiellement jusqu'à ladite partie médiane de façon que ladite articulation avant s'inscrive dans ladite paroi en élévation.

Avantageusement, ledit bord tombé et ladite paroi en élévation se rejoignent au niveau de la partie médiane dudit bras.

L'invention concerne également un véhicule automobile équipé d'un bras de suspension du type présentant une forme de boomerang réalisée à partir d'une plaque dont l'une des extrémités, dite extrémité support d'une partie tournante, est destinée à être couplée à une roue, l'autre extrémité, dite articulation avant, et la partie médiane du bras, dite articulation arrière, étant destinées à être couplées à un berceau solidaire du châssis dudit véhicule, caractérisé en ce qu'au moins le rebord d'extrémité s'étendant entre ladite extrémité support d'une partie tournante et ladite articulation arrière présente un prolongement en élévation par rapport à la face, dite face supérieure, de ladite plaque destinée à être dirigée vers le haut lorsque ledit bras est monté sur ledit châssis.

D'autres caractéristiques et avantages de l'invention apparaîtront plus clairement à la lecture de la description suivante d'un mode de réalisation préférentiel de l'invention, et de l'une de ses variantes, donnée à titre d'exemples illustratifs et non limitatifs, et des dessins annexés parmi lesquels :
- la figure 1 est une vue en perspective d'un bras de suspension selon un mode de réalisation préférentiel de l'invention ;
- la figure 2 est une vue selon une coupe transversale du bras de suspension illustré par la figure 1 ;
- la figure 3 est une vue en coupe transversale d'un bras de suspension selon une variante de l'invention.

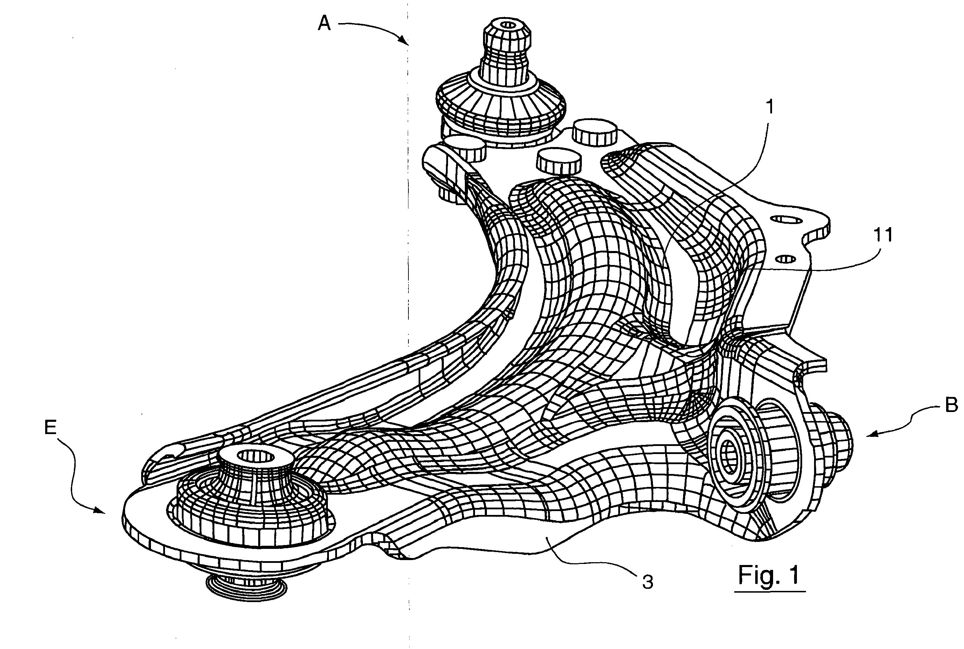

En référence à la figure 1, on rappelle qu'un bras de suspension de type boomerang est défini par tous points caractéristiques :
- le point A, centre de l'articulation avant du bras ;
- le point B, centre de l'articulation arrière du bras, destiné à être
- couplé au berceau du véhicule par une liaison pivotante, de telle sorte que le bras puisse être animé d'un mouvement de rotation autour d'un axe reliant les points A et B ;
- le point E, qui lie le bras à une partie tournante du véhicule.

Un tel bras est classiquement réalisé à partir d'une unique plaque en tôle, mise en forme par emboutissage. La tôle présentera par exemple une épaisseur de 4 mm.

Tel que déjà mentionné précédemment, le principe de l'invention réside dans le fait de prévoir, à partir du rebord reliant les points B et E, un prolongement en élévation par rapport à la face supérieure 1 du bras, c'est-à-dire la face destinée à être dirigée vers le haut lorsque le bras est monté sur le véhicule.

On note que le bras illustré sur la figure 1 est représenté sensiblement dans sa position de montage.

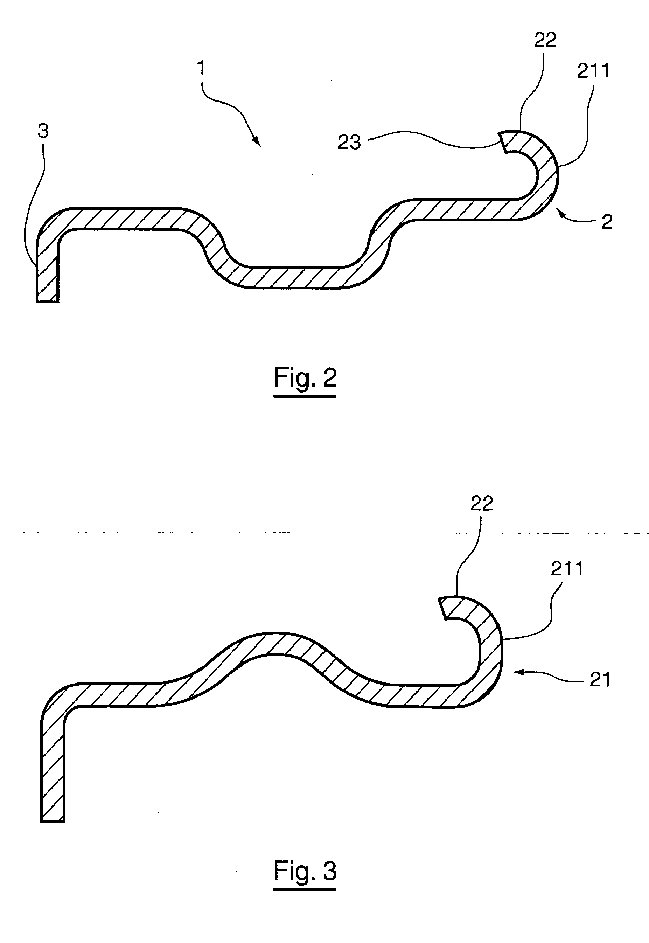

La figure 2 procure une vue en coupe transversale du bras représenté par la figure 1.

Tel que cela apparaît, le rebord 2 s'étendant entre les points B et E du bras présente un prolongement 21 en élévation par rapport à la face supérieure 1 du bras.

Selon le présent mode de réalisation de l'invention, le rebord s'étendant entre les points B et A du bras présente un bord tombé 3, c'est-à-dire un bord dont l'extrémité est dirigée vers la face du bras opposé à la face supérieure 1.

En outre, le prolongement 21 présente, une partie supérieure courbée 22, la courbure étant en l'occurrence réalisée de telle sorte que l'extrémité libre 23 du prolongement soit dirigée vers la face supérieure 1 du bras.

On crée de cette façon un bord dit roulé.

On note que, selon le mode de réalisation illustré par la figure 2, le prolongement 21 présent une courbure continue (éventuellement avec un rayon de courbure évolutif).

La figure 3 illustre une variante de réalisation selon laquelle le prolongement 21 du rebord du bras présente une portion -droite 211 se prolongeant par une partie supérieure courbée.

A titre indicatif, le bord roulé présente les caractéristiques suivantes :
- les deux plis présentent chacun un rayon de courbure d'environ 8mm;
- la portion droite 211 s'étend sur une hauteur d'environ 1 mm (pouvant varier, sur la longueur du prolongement 21, de 1 à 10 mm).

Par ailleurs, tel qu'illustré par la figure 1, le bras de suspension présent au voisinage du rebord s'étendant entre les points A et E une paroi 11 en élévation par rapport à la face supérieure du bras 1, cette paroi 11 s'étendant jusqu'à la partie médiane de façon que le centre de l'articulation avant du bras s'inscrive dans cette paroi 11.

Selon un mode de réalisation préférentiel du bras de suspension selon l'invention, la paroi 11 et le bord tombé 3 se rejoignent au niveau du point A du bras.

## Revendications

1. Bras de suspension pour une roue d'un véhicule automobile, du type présentant une forme de boomerang réalisée à partir d'une plaque dont l'une des extrémités, dite extrémité support (E) d'une partie tournante, est destinée à être couplée à une roue, l'autre extrémité, dite articulation avant (A), et la partie médiane du bras, dite articulation arrière (B), étant destinées à être couplées à un berceau solidaire du châssis dudit véhicule,
**caractérisé en ce qu'**au moins le rebord d'extrémité s'étendant entre ladite extrémité support (E) d'une partie tournante et ladite articulation arrière (B) présente un prolongement (21) en élévation par rapport à la face (1), dite face supérieure, de ladite plaque destinée à être dirigée vers le haut lorsque ledit bras est monté sur ledit berceau, ledit prolongement en élévation (21)présentant transversalement une partie supérieure courbée (22) de façon que l'extrémité libre (23) dudit prolongement soit dirigée vers le bas, en direction de ladite face supérieure (1).

2. Bras de suspension selon la revendication 1, **caractérisé en ce que** le rebord s'étendant entre ladite articulation avant (A) et ladite articulation arrière (B) présente un bord tombé (3).

3. Bras de suspension selon l'une quelconque des revendications 1 à 2, **caractérisé en ce que** ledit prolongement (21) en élévation présente transversalement une courbure continue.

4. Bras de suspension selon l'une quelconque des revendications 1 à 2, **caractérisé en ce que** ledit prolongement (21) en élévation présente transversalement une portion sensiblement droite (211) se prolongeant par une partie supérieure courbée (22).

5. Bras de suspension selon l'une quelconque des revendications 1 à 4, **caractérisé en ce qu'**il présente, au voisinage d'un rebord s'étendant entre ladite articulation avant (A) et ladite extrémité support (E), une paroi en élévation (11) par rapport à ladite face supérieure (1).

6. Bras de suspension selon la revendication 5, **caractérisé en ce que** ladite paroi en élévation (11) s'étend jusqu'à ladite partie médiane de façon que ladite articulation avant (A) s'inscrive dans ladite paroi en élévation (11).

7. Bras de suspension selon les revendications 2 et 6, **caractérisé en ce que** ledit bord tombé (3) et ladite paroi en élévation (11) se rejoignent au niveau de la partie médiane dudit bras.

8. Véhicule automobile équipé d'un bras de suspension du type présentant une forme de boomerang réalisée à partir d'une plaque dont l'une des extrémités, dite extrémité support (E) d'une partie tournante, est destinée à être couplée à une roue, l'autre extrémité, dite articulation avant (A), et la partie médiane du bras, dite articulation arrière (B), étant destinées à être couplées à un berceau solidaire du châssis dudit véhicule, **caractérisé en ce qu'**au moins le rebord d'extrémité s'étendant entre ladite extrémité support (E) d'une partie tournante et ladite articulation arrière (B) présente un prolongement (21) en élévation par rapport à la face (1), dite face supérieure, de ladite plaque destinée à être dirigée vers le haut lorsque ledit bras est monté sur ledit châssis, ledit prolongement en élévation (21) présentant transversalement une partie supérieure courbée (22) de façon que l'extrémité libre (23) dudit prolongement soit dirigée vers le bas, en direction de ladite face supérieure (1).

## Claims

1. Suspension arm for a wheel of a motor vehicle, of the type having a boomerang shape made from a plate of which one of the ends, known as the support end (E) of a rotating portion, is intended to be coupled to a wheel, the other end, known as the front articulation (A), and the central portion of the arm, known as the rear articulation (B), being intended to be coupled to a cradle integral with the chassis of said vehicle,
**characterized in that** at least the terminal edge extending between said support end (E) of a rotating portion and said rear articulation (B) has an extension (21) rising relative to the face (1), known as the upper face, of said plate intended to be oriented upwards when said arm is mounted on said cradle, said rising extension (21) having an upper curved portion (22) in the transverse direction so that the free end (23) of said extension is oriented downwards, in the direction of said upper face (1).

2. Suspension arm according to Claim 1, **characterized in that** the edge extending between said front articulation (A) and said rear articulation (B) has a dropped edge (3).

3. Suspension arm according to any one of Claims 1 to 2, **characterized in that** said rising extension (21) has a continuous curvature in the transverse direction.

4. The suspension arm according to any one of Claims 1 to 2, **characterized in that** said rising extension (21) has a substantially straight portion (211) in the transverse direction, extended by an upper curved portion (22).

5. Suspension arm according to any one of Claims 1 to 4, **characterized in that** in the vicinity of an edge extending between said front articulation (A) and said support end (E), it has a rising wall (11) relative to said upper face (1).

6. Suspension arm according to Claim 5, **characterized in that** said rising wall (11) extends as far as said central portion so that said front articulation (A) is contained within said rising wall (11).

7. Suspension arm according to Claims 2 and 6, **characterized in that** said dropped edge (3) and said rising wall (11) are joined in the region of the central portion of said arm.

8. Motor vehicle provided with a suspension arm of the type having a boomerang shape made from a plate of which one of the ends, known as the support end (E) of a rotating portion, is intended to be coupled to a wheel, the other end, known as the front articulation (A), and the central portion of the arm, known as the rear articulation (B), being intended to be coupled to a cradle integral with the chassis of said vehicle, **characterized in that** at least the terminal edge extending between said support end (E) of a rotating portion and said rear articulation (B) has an extension (21) rising relative to the face (1), known as the upper face, of said plate intended to be oriented upwards when said arm is mounted on said chassis, said rising extension (21) having an upper curved portion (22) in the transverse direction so that the free end (23) of said extension is oriented downwards, in the direction of said upper face (1).

## Patentansprüche

1. Querlenker für ein Rad eines Kraftfahrzeugs, von der Art, die eine Bumerangform hat, die ausgehend von einer Platte hergestellt wird, deren eines Ende, Stützende (E) eines drehenden Teils genannt, dazu bestimmt ist, mit einem Rad gekoppelt zu werden, während das andere Ende, vorderes Gelenk (A) genannt, und der mittlere Teil des Lenkers, hinteres Gelenk (B) genannt, dazu bestimmt sind, mit einer fest mit dem Fahrgestell des Fahrzeugs verbundenen Halterung verbunden zu werden,
**dadurch gekennzeichnet, dass** mindestens die Endrandleiste, die sich zwischen dem Stützende (E) eines drehenden Teils und dem hinteren Gelenk (B) erstreckt, eine Verlängerung (21) nach oben bezüglich der so genannten oberen Seite (1) der Platte aufweist, die dazu bestimmt ist, nach oben gerichtet zu sein, wenn der Lenker auf die Halterung montiert ist, wobei die nach oben gehende Verlängerung (21) in Querrichtung einen oberen Teil (22) aufweist, der so gekrümmt ist, dass das freie Ende (23) der Verlängerung nach unten in Richtung der Oberseite (1) gerichtet ist.

2. Querlenker nach Anspruch 1, **dadurch gekennzeichnet, dass** die Randleiste, die sich zwischen dem vorderen Gelenk (A) und dem hinteren Gelenk (B) erstreckt, einen Bördelrand (3) aufweist.

3. Querlenker nach einem der Ansprüche 1 bis 2, **dadurch gekennzeichnet, dass** die nach oben gehende Verlängerung (21) in Querrichtung eine durchgehende Krümmung aufweist.

4. Querlenker nach einem der Ansprüche 1 bis 2, **dadurch gekennzeichnet, dass** die nach oben gehende Verlängerung (21) in Querrichtung einen im Wesentlichen geraden Teil (211) aufweist, der sich durch einen gekrümmten oberen Teil (22) verlängert.

5. Querlenker nach einem der Ansprüche 1 bis 4, **dadurch gekennzeichnet, dass** er in der Nähe einer Randleiste, die sich zwischen dem vorderen Gelenk (A) und dem Stützende (E) erstreckt, eine bezüglich der Oberseite (1) nach oben gehende Wand (11) aufweist.

6. Querlenker nach Anspruch 5, **dadurch gekennzeichnet, dass** die nach oben gehende Wand (11) sich bis zum mittleren Bereich erstreckt, so dass das vordere Gelenk (A) sich in die nach oben gehende Wand (11) einfügt.

7. Querlenker nach den Ansprüchen 2 und 6, **dadurch gekennzeichnet, dass** der Bördelrand (3) und die nach oben gehende Wand (11) sich im Bereich des mittleren Bereichs des Lenkers vereinigen.

8. Kraftfahrzeug, das mit einem Querlenker von der Art ausgestattet ist, die eine Bumerangform aufweist, die ausgehend von einer Platte hergestellt wird, deren eines Ende, Stützende (E) eines drehenden Bereichs genannt, dazu bestimmt ist, mit einem Rad gekoppelt zu werden, während das andere Ende, vorderes Gelenk (A) genannt, und der mittlere Bereich des Lenkers, hinteres Gelenk (B) genannt, dazu bestimmt sind, mit einer fest mit dem Fahrgestell des Fahrzeugs verbundenen Halterung gekoppelt zu werden, **dadurch gekennzeichnet, dass** mindestens die Endrandleiste, die sich zwischen dem Stützende (E) eines drehenden Teils und dem hinteren Gelenk (B) erstreckt, eine Verlängerung (21) nach oben bezüglich der Seite (1), Oberseite genannt, der Platte aufweist, die dazu bestimmt ist, nach oben gerichtet zu sein, wenn der Lenker auf das Fahrgestell montiert ist, wobei die nach oben gehende Verlängerung (21) in Querrichtung einen oberen Bereich (22) aufweist, der so gekrümmt ist, dass das freie Ende (23) der Verlängerung nach unten in Richtung der Oberseite (1) gerichtet ist.
